# EUROPEAN PATENT SPECIFICATION

(11) **EP 0 538 205 B1**
(45) Date of publication and mention of the grant of the patent: **02.01.1997**
(21) Application number: 92830553.1
(22) Date of filing: 01.10.1992
(51) Int. Cl.: A62D 3/00, B09B 3/00, C04B 18/04, C04B 26/32

(54) **Process for making inert industrial waste with a high content of heavy metals, for example lead**
Verfahren zur Herstellung inaktiver Industrieabfälle mit hohem Schwermetall, zum Beispiel Bleigehalt
Procédé de la préparation de déchets industriels inertes à teneur élevée en métaux lourds, par exemple en plomb

(30) Priority: 16.10.1991 IT RM910785
(43) Date of publication of application: 21.04.1993
(73) Proprietor: ECOTEC GESTIONE SERVIZI S.r.l., I-00198 Roma RM (IT)
(72) Inventor: Imerito, Aldo, I-00197 Roma (IT)
(74) Representative: Di Cerbo, Mario

(56) References cited:
- EP-A- 0 042 770
- DE-A- 3 332 001
- DE-A- 4 001 230
- FR-A- 2 029 506
- PATENT ABSTRACTS OF JAPAN vol. 11, no. 60 (C-405)24 February 1987
- PATENT ABSTRACTS OF JAPAN vol. 6, no. 54 (C-97)9 April 1982

## Description

The present invention has as its subject a process for making inert industrial waste having a high content of heavy metals, for example lead. (As is known, lead is the metal most commonly found in waste of this kind, and furthermore it is subject to elution in an acid environment). The process is based on the principle of transforming the inorganic compounds in said waste into polysilicates of heavy metals, for example of lead, in which the heavy metals are imprisoned in an extremely stable siloxanic structure.

As is known, manufacturing industries are presented with the dramatic problem of neutralizing, that is to say making inert, industrial waste containing toxic metals, in particular lead. At the present state of evolution of technology, this problem is mainly solved by separating the metallic compounds, which are later re-cycled on site or used in other industrial processes. However, in the majority of cases this method is found to create disadvantages from an economic point of view, and often shows a low level of efficiency. For this reason, the method of landfilling the waste in special concrete capsules continues to be used. Unfortunately, however, this method is not completely safe either, and it is considered in a negative light by public opinion due to the potential environmental impact over a period of time. As an alternative to these methods, there is the technique which provides for the addition, to industrial waste of this type, of silicates or concrete to cause an ion exchange between the toxic metals contained within the waste and the metal ions of the silicates or concrete added thereto. However, in this case also there are drawbacks. The greatest disadvantage associated with this type of technology is, in fact, the necessity of using large quantities of reagents, thus leaving large volumes of final treated waste to be disposed of.

It has now been unexpectedly found that all these limitations can be overcome by adopting the process according to the present invention, which furthermore presents other advantages that will be evident hereinafter.

The process for making inert industrial solid waste having a high content of heavy metals, for example lead, according to the present invention, is characterized in that said waste is subjected to the following operations:
- grinding;
- mixing and homogenizing the ground waste with alkyloxysiloxanes;
- heating the mixture thus obtained at temperatures comprised between 150 ad 300°C, preferably between 180 and 280°C; and
- transforming the product thus obtained into a compact product which is easy to transport.

Transformation into a compact product can be carried out by means of addition - to the product obtained after heating at temperatures comprised between 150 and 300°C - of inert substances, for example substances chosen from the group including oxides, salts - in particular silicates and carbonates - and combinations thereof.

This transformation can also be made by means of heat-treating of the product - obtained by heating at temperatures in the range of between 150 and 300°C - at temperatures in the range of between 1000 and 1500°C, preferably at temperatures of between 1100 and 1200°C.

Grinding of the waste can be continued until a particle size of between 0,01 and 0,2 mm is obtained.

The ratio of the ground waste to the alkyloxysiloxanes can be chosen so as to obtain a ratio of between 5 and 0,5 parts by weight of heavy metal for every part by weight of alkyloxysiloxane.

The alkyloxysiloxanes to be used according to the present invention are preferably, at least in part, ethyloxysiloxanes.

The present invention is not limited to the process for making inert industrial waste having a high content of heavy metals, for example lead. It also extends to the product thus obtainable and to its use.

Up to this point a description of a general nature has been given of the subject of the present invention. With the aid of the following example, which refers to a specific embodiment, a more detailed description will now be given, to clarify the objects, characteristics, advantages and working method thereof.

### EXAMPLE

A solid material, originating from the waste products of ceramic manufacture, is subjected to the process according to the present invention. This is a form of industrial waste which is notoriously contaminated by extremely high concentrations of lead. Upon chemical analysis, the industrial waste had a lead content (present in the form of oxide) equal to 29200 mg per kg of waste. Elution tests carried out using officially recognized conventional methods, measured a concentration in the eluate equal to 74,9 mg/l of lead. This is a decidedly high level, such as to prevent its disposal in any kind of dump.

According to the invention, a sample amount of 25 g of the industrial waste, previously ground, was additioned slowly with 0,274 g of a mixture of oligoethyloxysiloxanes in the form of a transparent liquid (density at 20°C 1,05 g/cm³; freezing point around -60°C; percentage of SiO₂ 40%). The mixture obtained was then homogenized. The dosing ratio was therefore of 1,5 parts reagent to 4 parts lead as Pb. The mixture obtained was stirred and heated slowly, up to approximately 200°C. No effervescence or development of vapour was noted. No smells of any kind were given off. A semi-solid compound of the treated waste was obtained, of a yellowish colour, of a rubbery consistency, odourless.

The cession test was repeated on the material thus obtained, giving a much lower result, equal to 2,96 mg/l. The yield in reduction of the concentration of lead in the eluate therefore results to be 96%. This is an extremely high yield, decidedly superior even to that calculated, for the same material, using normal routine treatments based on mixtures of cement and silicates. In fact treatment, using a dose of 7% of silicates and cement sufficient to harden the treated matrix, resulted in a release equal to 7,9 mg/l with a yield of only 89,4%. (This percentage is even lower when it is considered that the addition of silicates and cement, causing an increase in the volume of waste, has in effect caused a dilution thereof).

## Claims

1. Process for making inert industrial solid waste having a high content of heavy metals, wherein said waste is subjected to the following operations:
- grinding;
- mixing and homogenizing the ground waste with alkyloxysiloxanes;
- heating the homogenized mixture thus obtained at temperatures comprised in the range between 150 and 300°C; and
- transforming the product thus obtained into a compact product which is easy to transport.

2. Process for making inert industrial solid waste having a high content of heavy metals according to claim 1, in which heavy metals include lead.

3. Process for making inert industrial solid waste having a high content of heavy metals according to claims 1 and 2, in which heating the homogenized mixture takes place at temperatures comprised in the range between 180 and 280°C.

4. Process for making inert industrial solid waste having a high content of heavy metals, according to claims 1 to 3, in which the transformation into a compact product of the product obtained by means of heating at temperatures of between 150 and 300°C takes place by means of the addition of inert materials.

5. Process for making inert industrial solid waste having a high content of heavy metals, according to claim 4, in which the inert materials are selected from the group comprising oxides, silicates and carbonates, and combinations thereof.

6. Process for making inert industrial solid waste having a high content of heavy metals, according to claim 1 to 3, in which the transformation into a compact product of the product obtained by means of heating at temperatures of between 150 and 300°C, takes place by means of heat treating at temperatures of between 1000 and 1500°C.

7. Process for making inert industrial solid waste having a high content of heavy metals, according to claim 6, in which the temperature used for heat treatment is comprised in the range of 1100-1200°C.

8. Process for making inert industrial solid waste having a high content of heavy metals, according to any one of the preceding claims, in which the grinding of the waste is continued until a particle size of between 0,01 and 0,2 mm is obtained.

9. Process for making inert industrial solid waste having a high content of heavy metals, according to any one of the preceding claims, in which mixture of the ground waste with alkyloxysiloxanes requires a ratio comprised between 5 and 0,5 parts by weight of heavy metal to each part by weight of alkyloxysiloxane.

10. Process for making inert industrial waste having a high content of heavy metals, according to any one of the preceding claims, in which the alkyloxysiloxanes are, at least in part, ethyloxysiloxanes.

11. Product characterized in that it is obtainable using the process according to claims 1 to 10.

## Patentansprüche

1. Verfahren zum Inertmachen von festen Industrieabfällen mit einem hohen Schwermetallgehalt, worin die Abfälle den folgenden Arbeitsschritten unterzogen werden:
- Zerkleinern;
- Vermischen und Homogenisieren der zerkleinerten Abfälle mit Alkyloxysiloxanen;
- Erwärmen des so erhaltenen homogenisierten Gemisches auf Temperaturen im Bereich zwischen 150 und 300°C; und
- Umwandeln des so erhaltenen Produkts in ein kompaktes Produkt, welches leicht transportiert werden kann.

2. Verfahren zum Inertmachen von festen Industrieabfällen mit einem hohen Schwermetallgehalt nach Anspruch 1, in welchem die Schwermetalle Blei einschließen.

3. Verfahren zum Inertmachen von festen Industrieabfällen mit einem hohen Schwermetallgehalt nach Anspruch 1 und 2, in welchem das Erwärmen des homogenisierten Gemisches bei Temperaturen im Bereich zwischen 180 und 280°C erfolgt.

4. Verfahren zum Inertmachen von festen Industrieabfällen mit einem hohen Schwermetallgehalt nach den Ansprüchen 1 bis 3, in welchem die Umwandlung des durch Erwärmen auf Temperaturen zwischen 150 und 300°C erhaltenen Produktes in ein kompaktes Produkt durch die Zugabe von inerten Materialien erfolgt.

5. Verfahren zum Inertmachen von festen Industrieabfällen mit einem hohen Schwermetallgehalt nach Anspruch 4, in welchem die inerten Materialien gewählt werden aus der Gruppe umfassend Oxide, Silicate und Carbonate und Kombinationen davon.

6. Verfahren zum Inertmachen von festen Industrieabfällen mit einem hohen Schwermetallgehalt nach Anspruch 1 bis 3, in welchem die Umwandlung des durch Erwärmen auf Temperaturen zwischen 150 und 300°C erhaltenen Produkts in ein kompaktes Produkt durch eine Wärmebehandlung bei Temperaturen zwischen 1000 und 1500°C erfolgt.

7. Verfahren zum Inertmachen von festen Industrieabfällen mit einem hohen Schwermetallgehalt nach Anspruch 6, in welchem die für die Wärmebehandlung verwendete Temperatur im Bereich von 1100-1200°C liegt.

8. Verfahren zum Inertmachen von festen Industrieabfällen mit einem hohen Schwermetallgehalt nach einem der vorhergehenden Ansprüche, in welchem das Zerkleinern der Abfälle solange fortgesetzt wird, bis eine Teilchengröße zwischen 0,01 und 0,2 mm erhalten wird.

9. Verfahren zum Inertmachen von festen Industrieabfällen mit einem hohen Schwermetallgehalt nach einem der vorhergehenden Ansprüche, in welchem in dem Gemisch der zerkleinerten Abfälle mit Alkyloxysiloxanen ein Verhältnis zwischen 5 und 0,5 Gewichtsteilen Schwermetall pro Gewichtsteil Alkyloxysiloxan vorliegen muß.

10. Verfahren zum Inertmachen von Industrieabfällen mit einem hohen Schwermetallgehalt nach einem der vorhergehenden Ansprüche, in welchem die Alkyloxysiloxane zumindest teilweise Ethyloxysiloxane sind.

11. Produkt, **dadurch gekennzeichnet**, daß es unter Verwendung des Verfahrens nach den Ansprüchen 1 bis 10 erhalten werden kann.

## Revendications

1. Procédé pour la préparation de déchets solides industriels inertes ayant une teneur élevée en métaux lourds, dans lequel les déchets sont soumis aux opérations suivantes :
- broyage ;
- mixage et homogénéisation des déchets broyés avec des alkyloxysiloxanes ;
- chauffage du mélange homogénéisé ainsi obtenu à des températures comprises dans la plage entre 150 et 300°C ; et
- transformation du produit ainsi obtenu en un produit compact facile à transporter.

2. Procédé pour la préparation de déchets solides industriels inertes ayant une teneur élevée en métaux lourds selon la revendication 1, dans lequel les métaux lourds comprennent le plomb.

3. Procédé pour la préparation de déchets solides industriels inertes ayant une teneur élevée en métaux lourds selon les revendications 1 et 2, dans lequel le chauffage du mélange homogénéisé s'effectue à des températures comprises dans la plage entre 180 et 280°C.

4. Procédé pour la préparation de déchets solides industriels inertes ayant une teneur élevée en métaux lourds selon les revendications 1 à 3, dans lequel la transformation en un produit compact du produit obtenu au moyen du chauffage à des températures entre 150 et 300°C s'effectue par addition de matériaux inertes.

5. Procédé pour la préparation de déchets solides industriels inertes ayant une teneur élevée en métaux lourds selon la revendication 4, dans lequel les matériaux inertes sont choisis dans le groupe comprenant des oxydes, des silicates et des carbonates et leurs combinaisons.

6. Procédé pour la préparation de déchets solides industriels inertes ayant une teneur élevée en métaux lourds selon les revendications 1 à 3, dans lequel la transformation en un produit compact du produit obtenu par chauffage à des températures entre 150 et 300°C, s'effectue au moyen de traitement thermique à des températures entre 1000 et 1500°C

7. Procédé pour la préparation de déchets solides industriels inertes ayant une teneur élevée en métaux lourds selon la revendication 6, dans lequel la température utilisée pour le traitement thermique est comprise dans la plage de 1100-1500°C.

8. Procédé pour la préparation de déchets solides industriels inertes ayant une teneur élevée en métaux lourds selon l'une quelconque des revendications précédentes, dans lequel le broyage des déchets est poursuivi jusqu'à l'obtention d'une taille particulaire entre 0,01 et 0,2 mm.

9. Procédé pour la préparation de déchets solides industriels inertes ayant une teneur élevée en métaux lourds selon l'une quelconque des revendications précédentes, dans lequel le mélange de déchets broyés avec des alkyloxysiloxanes exige un rapport compris entre 5 et 0,5 parties en poids de métal lourd pour chaque partie en poids d'alkyloxysiloxane.

10. Procédé pour la préparation de déchets industriels inertes ayant une teneur élevée en métaux lourds selon l'une quelconque des revendications précédentes, dans lequel les alkyloxysiloxanes sont, au moins en partie, des éthyloxysiloxanes.

11. Produit caractérisé en ce qu'il peut être obtenu en ayant recours au procédé selon les revendications 1 à 10.
